# EUROPEAN PATENT APPLICATION

(11) **EP 3 748 204 A1**
(43) Date of publication of application: **09.12.2020**
(21) Application number: 19747817.5
(22) Date of filing: 24.01.2019
(51) Int. Cl.: F16J 15/34

(54) **SEAL DEVICE**

(30) Priority: 30.01.2018 JP 2018014100
(71) Applicant: Eagle Industry Co., Ltd., Minato-ku Tokyo 105-8587 (JP)
(72) Inventor: KIMURA, Tadahiro, Tokyo 105-8587 (JP); OKADA ,Tetsuzo, Tokyo 105-8587 (JP)
(74) Representative: WSL Patentanwälte Partnerschaft mbB
(86) International application number: PCT/JP2019/002206
(87) International publication number: WO 2019/151100

(57) **Abstract**

Provided is a sealing apparatus that is used in equipment, which includes a rotating shaft, to be able to reliably prevent a fluid from leaking from a space where the fluid flows to a space accommodating a device that is vulnerable to the fluid. A sealing apparatus 1 is used in equipment, which includes a rotating shaft 2, to seal a first space where a fluid flows and a second space S1 accommodating a device that is vulnerable to the fluid. The sealing apparatus 1 includes a main seal 15 that partially defines the first space to restrict the fluid from leaking from the first space and includes a rotating seal ring 12 provided on the rotating shaft 2, a stationary seal ring 17 firmly provided in the equipment, and biasing member 18 configured to bias the rotating seal ring 12 and the stationary seal ring 17 in a facing direction; and an auxiliary seal 16 that partially defines the second space S1 to prevent the fluid from infiltrating into the second space S1 and is in sliding contact with the rotating shaft of a member connected to the rotating shaft 2 at a position which is different from a position of the main seal 15.

## Description

### {TECHNICAL FIELD}

The present invention relates to a sealing apparatus that is used in equipment, which includes a rotating shaft, to seal a space where a fluid flows and a space accommodating a device that is vulnerable to the fluid.

### {BACKGROUND ART}

An air conditioner, a vehicle, and the like operate using a driving force transmitted from a rotating shaft, and an electric motor is an example of equipment including the rotating shaft. The electric motor includes a rotor mounted on the rotating shaft, a stator disposed on an outer periphery of the rotor, and a case that supports the rotating shaft and has a space accommodating the rotor and the stator. At least one of the rotor and the stator is an electromagnet on which a coil is wound, and is energized to generate a magnetic force, so that the rotating shaft rotates together with the rotor.

By the way, when the electric motor is driven, the electric motor generates heat due to the energization of the coil or sliding contact between the rotating shaft and bearings, so that the temperature of the electric motor increases. For this reason, a deterioration in the efficiency or a failure of the electric motor due to the generation of heat is prevented by cooling the electric motor. For example, in an electric motor disclosed in Patent Citation 1, an inner side of a rotating shaft is hollow, and a pipe having a smaller diameter than the inner diameter of the rotating shaft is disposed in an internal space of the rotating shaft. A refrigerant is delivered into the pipe from a refrigerant tank, which is installed outside the electric motor, by a pump. After the refrigerant passes through the interior of the pipe to flow from a tip of the pipe into a flow path that is formed between an interior of the rotating shaft and an exterior of the pipe, the refrigerant returns to the refrigerant tank through the flow path. As described above, since the refrigerant flows through the flow path formed between the rotating shaft and the pipe, sliding contact portions between the rotating shaft and bearings can be cooled, and the rotor can be cooled via the rotating shaft.

In Patent Citation 1, a mechanical seal is used as a sealing apparatus to prevent the fluid from leaking from the internal space of the rotating shaft to a space accommodating the rotating shaft and a rotor, a stator, and the like which are electronic and electric devices, and to protect a device which is disposed in the space and is vulnerable to the fluid. The mechanical seal includes a rotating seal ring fixed to an end portion of the rotating shaft, and a stationary seal ring fixed to a case forming the electric motor. The stationary seal ring is biased in an axial direction by biasing member, and a sliding contact surface of the stationary seal ring and a sliding contact surface of the rotating seal ring are in sliding contact with each other, so that the fluid is prevented from leaking from the internal space of the rotating shaft to the space accommodating the device that is vulnerable to the fluid.

### {CITATION LIST}

### {Patent Literature}

Patent Citation 1: JP 2016-050534 A

### {SUMMARY OF INVENTION}

### {Technical Problem}

However, the mechanical seal disclosed in Patent Citation 1, the fluid may leak from between the rotating seal ring and the stationary seal ring, which is a problem, and the mechanical seal is not sufficient enough to prevent the fluid from infiltrating into the space accommodating the device that is vulnerable to the fluid.

The present invention is made in light of such a problem, and an object of the present invention is to provide a sealing apparatus that is used in equipment, which includes a rotating shaft, to reliably prevent a fluid from leaking from a space where the fluid flows to a space accommodating a device that is vulnerable to the fluid.

### {Solution to Problem}

In order to solve the foregoing problem, according to the present invention, there is provided a sealing apparatus that is used in equipment, which includes a rotating shaft, to seal a first space where a fluid flows and a second space accommodating a device that is vulnerable to the fluid. The sealing apparatus includes: a main seal that partially defines the first space to restrict the fluid from leaking from the first space and includes a rotating seal ring provided on the rotating shaft, a stationary seal ring provided in the equipment, and biasing member configured to bias the rotating seal ring and the stationary seal ring in a facing direction; and an auxiliary seal that partially defines the second space to prevent from the fluid from infiltrating into the second space and is in sliding contact with the rotating shaft or a member connected to the rotating shaft at a position, which is different from a position of the main seal. According to this characteristic, in the main seal, a sliding contact surface of the stationary seal ring and a sliding contact surface of the rotating seal ring are in sliding contact with each other, so that the fluid is effectively restricted from leaking from the first space where the fluid flows. In addition, since the auxiliary seal prevents the fluid from infiltrating into the second space accommodating the device that is vulnerable to the fluid, even if the fluid leaks from the main seal, the auxiliary seal serves to prevent the fluid, which has leaked from the main seal, from infiltrating into the second space accommodating the device that is vulnerable the fluid. Therefore, it is possible to reliably prevent the fluid from leaking from the first space where the fluid flow to the second space accommodating the device that is vulnerable to the fluid.

It is preferable that the auxiliary seal may be configured to include the rotating seal ring, a stationary seal ring that is fixed to the equipment unlike the stationary seal ring of the main seal, and a biasing member that biases the rotating seal ring and the stationary seal ring forming the auxiliary seal in a facing direction. Accordingly, since the auxiliary seal adopts the configuration where the rotating seal ring and the stationary seal ring of the auxiliary seal are biased in the facing direction by the biasing member of the auxiliary seal, it is possible to maintain the ability of sealing the rotating shaft that is driven to rotate; and thereby, it is possible to reliably prevent the fluid from leaking from the first space where the fluid flows to the second space accommodating the device that is vulnerable to the fluid. In addition, since the same rotating seal ring is used in the main seal and the auxiliary seal, the structure of the sealing apparatus becomes simplified.

It is preferable that the biasing member of the main seal and the biasing member of the auxiliary seal may be separately formed, and the biasing member of the auxiliary seal may have a biasing force smaller than a biasing force of the biasing member of the main seal. Accordingly, compared to the main seal which partially defines the first space where the fluid flows and in which a refrigerant is supplied to the sliding contact surfaces, the biasing member of the auxiliary seal in which the fluid is not always supplied to sliding contact surfaces has a smaller biasing force; and thereby, it is possible to restrict resistance to the rotational driving of the rotating shaft, which is caused by the stationary seal ring of the auxiliary seal.

It is preferable that a pumping groove which directs a fluid to be sealed from the second space accommodating the vulnerable device to the first space where the fluid flows may be formed in at least one of sliding contact surfaces of the stationary seal ring of the auxiliary seal and the rotating seal ring. Accordingly, as the rotating shaft is driven to rotate, the fluid can be pushed out of the second space, which accommodates the device that is vulnerable to the fluid, by the pumping groove; and thereby, it is possible to effectively prevent the fluid from infiltrating into the second space.

It is preferable that the sealing apparatus may further includes a case body having an annular shape and provided with an inner wall portion and an outer wall portion, and the stationary seal ring and the biasing member which form the main seal and the stationary seal ring and the biasing member which form the auxiliary seal are retained between the inner wall portion and the outer wall portion of the case body. Accordingly, the stationary seal ring and the biasing member which form the main seal and the stationary seal ring and the biasing member which form the auxiliary seal are unitized by the case body, and the mounting of the unit in the equipment becomes easy.

It is preferable that a recessed portion which is recessed in an axial direction may be formed in the rotating seal ring between a sliding contact surface of the rotating seal ring, which is in sliding contact with the stationary seal ring of the main seal, and a sliding contact surface thereof which is in sliding contact with the stationary seal ring of the auxiliary seal. Accordingly, since the pressure of the fluid which has leaked from a sliding contact portion between the stationary seal ring of the main seal and the rotating seal ring is released in the recessed portion, the pressure of the fluid which intends to infiltrate from a sliding contact portion between the stationary seal ring of the auxiliary seal and the rotating seal ring becomes weak; and thereby, it is possible to effectively prevent the fluid infiltrating into the second space accommodating the device that is vulnerable to the fluid.

It is preferable that a third space may be formed between the main seal and the auxiliary seal, and a drain is formed so s to penetrate from the third space to an outside of the equipment. Accordingly, since the fluid is discharged outside the equipment from the third space that is formed between the main seal and the auxiliary seal, it is possible to effectively prevent the fluid from infiltrating into the second space accommodating the device that is vulnerable to the fluid.

### {BRIEF DESCRIPTION OF DRAWINGS}

FIG. 1 is a sectional view illustrating an electric motor to which a sealing apparatus according to a first embodiment of the present invention is applied.
FIG. 2 is an enlarged sectional view illustrating the sealing apparatus according to the first embodiment in detail.
FIG. 3A is a view illustrating a state before a member forming a main seal is assembled to a case body in the first embodiment, and FIG. 3B is a view illustrating an assembled state in the first embodiment.
FIG. 4A is a view illustrating a state where a member forming an auxiliary seal is assembled to the case body in the first embodiment, and FIG. 4B is a view illustrating a state where a seal unit is assembled to a housing in the first embodiment.
FIG. 5 is a sectional view illustrating a sealing apparatus according to a second embodiment of the present invention.
FIG. 6 is a sectional view illustrating a sealing apparatus according to a third embodiment of the present invention.

### {DESCRIPTION OF EMBODIMENTS}

Hereinafter, modes for implementing a sealing apparatus according to the present invention will be described based on embodiments.

### {First embodiment}

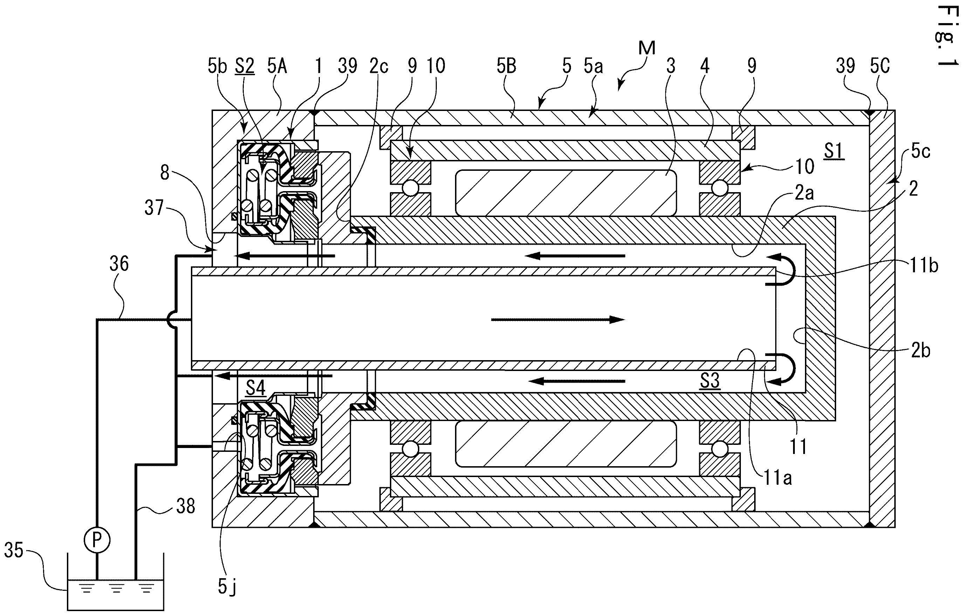

A sealing apparatus according to a first embodiment of the present invention will be described with reference to FIGS. 1 to 4.

As illustrated in FIG. 1, a sealing apparatus 1 according to the first embodiment is used in an electric motor M that can be cooled by allowing a refrigerant to flow through a refrigerant flow path. Firstly, the electric motor M will be described. The electric motor M includes a rotating shaft 2, a rotor 3 which is fixed to the rotating shaft 2 and rotates together with the rotating shaft 2, a stator 4 which has an annular shape and is disposed on an outer periphery of the rotor 3 while being spaced apart from the rotor 3 in a radial direction, and a housing 5 which accommodates the rotor 3 and the stator 4. The rotor 3 is an electromagnet on which a coil is wound, and the stator 4 is a permanent magnet. The coil forming the rotor 3 is energized from a power supply (not illustrated) to generate a magnetic force, so that the rotor 3 and the rotating shaft 2 fixed to the rotor 3 rotate integrally.

The housing 5 is a magnetic body made of iron or the like, and the rotating shaft 2 is a non-magnetic body made of stainless steel or the like. The housing 5 is split into three bodies in an axial direction of the rotating shaft 2, and split bodies 5A, 5B, and 5C are welded and fixed to each other in a sealed state by welded portions 39 on outer peripheries of the split bodies 5A, 5B, and 5C.

The housing 5 includes a peripheral wall portion 5a that is formed into a substantially cylindrical shape to form an outer peripheral surface and an inner peripheral surface of the housing 5, and supporting wall portions 5b and 5c that are formed into a substantially disk shape to form both side walls of the housing 5. The split body 5B forms the peripheral wall portion 5a of the housing 5, the split body 5A forms the supporting wall portion 5b of the housing 5, and the split body 5C forms the supporting wall portion 5c of the housing 5. Incidentally, the housing 5 is not limited to a split structure where as described above, the split bodies 5A to 5C form the peripheral wall portion 5a and the supporting wall portions 5b and 5c, respectively.

A through-hole 8 is formed at a radial center of the supporting wall portion 5b to penetrate through the supporting wall portion 5b in the axial direction. The stator 4 is fixed to an inner peripheral surface of the peripheral wall portion 5a by fixing means 9. Bearings 10 are mounted on an inner side of the stator 4, and the rotor 3 is supported via the bearings 10 on the stator 4. The rotating shaft 2 is fixed to an inner side of the rotor 3.

The rotating shaft 2 has a space 2a of which one end side is open. A conduit 11 is inserted into and disposed in the space 2a of the rotating shaft 2. The conduit 11 has a smaller outer diameter than the inner diameter of the rotating shaft 2, and includes a hollow portion 11a that penetrates through both axial ends of the conduit 11. In addition, the conduit 11 is supported coaxially with the rotating shaft 2 by supporting means (not illustrated) in a state where one axial side of the conduit 11 is disposed in the space 2a, an end portion 11b of the conduit 11 is disposed spaced apart from an inward end surface 2b of the space 2a, the other axial side of the conduit 11 protrudes from an opening end portion 2c of the rotating shaft 2 to extend and be disposed outside the space 2a.

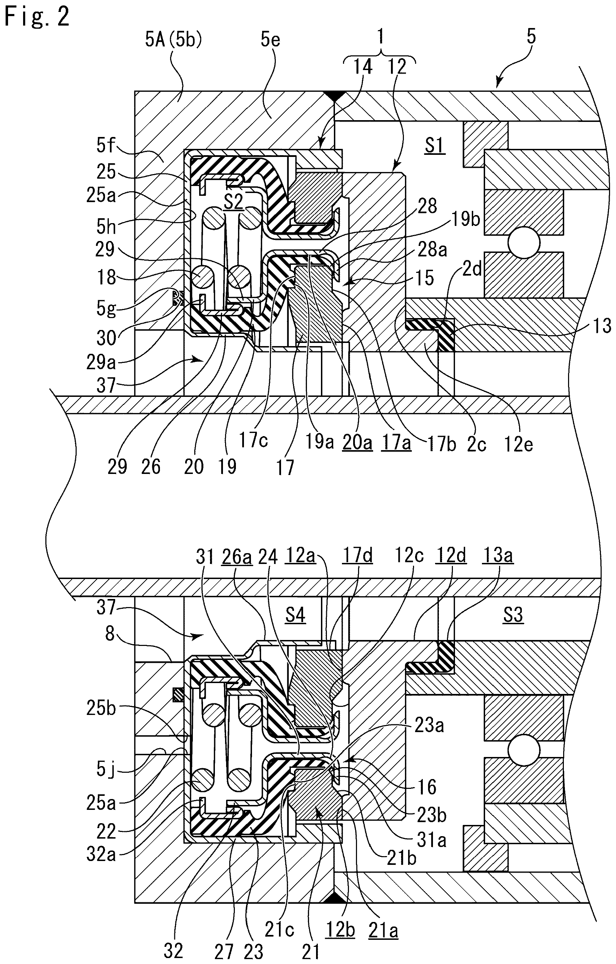

As illustrated in FIG. 2, a rotating seal ring 12 is fixed to the opening end portion 2c of the rotating shaft 2. Specifically, a step portion 2d including a recess on an inner diameter side is formed in the opening end portion 2c of the rotating shaft 2. A protrusion 12e which has an annular shape and protrudes from one axial end portion of the rotating seal ring 12 to extend in the axial direction is inserted into and disposed in the step portion 2d. A seal member 13 having an annular shape is disposed between the step portion 2d and the protrusion 12e, so that a gap between the opening end portion 2c of the rotating shaft 2 and the rotating seal ring 12 is in a sealed state.

The split body 5A which is the supporting wall portion 5b of the housing 5 has substantially the shape of a cylinder with a bottom, and includes a bottom plate portion 5f which has an annular plate shape and in which the through-hole 8 is formed, and a circumferential portion 5e which extends from an outer diameter side of the bottom plate portion 5f in the axial direction. A seal unit 14 which forms the sealing apparatus 1 together with the rotating seal ring 12 is disposed in and fixed to the split body 5A. In addition, an annular groove 5g is formed in an axial end surface 5h of the bottom plate portion 5f, and owing to a seal member 30 which has an annular shape and is disposed in the annular groove 5g, a gap between the supporting wall portion 5b and a bottom surface portion 25a of a case body 25 forming the seal unit 14 is in a sealed state.

The sealing apparatus 1 partitions a refrigerant flow path (including spaces S3 and S4 to be described later) where a refrigerant flows from a space S1 accommodating the rotor 3 and the stator 4 which are electronic devices vulnerable to the refrigerant, such that both are held in a sealed state. In addition, the sealing apparatus 1 seals the rotating shaft 2, and is an outside stationary mechanical seal which uses sliding contact surfaces 17a and 21a of stationary seal rings 17 and 21 forming the sealing apparatus 1 and sliding contact surfaces 12a and 12b of the rotating seal ring 12 as sealing surfaces to seal a liquid leaking from an inner peripheral side that is the refrigerant flow path through which highpressure refrigerant flows toward the space S1 on an outer peripheral side that is positioned on a low-pressure atmospheric pressure side to accommodate the rotor 3 and the stator 4 that are electronic devices vulnerable to the refrigerant, and in which biasing member 18 and 22 which bias the stationary seal rings 17 and 21 in the axial direction is provided on a side of the housing 5.

The seal unit 14 which is provided on a stationary side includes the stationary seal ring 17 forming a main seal 15 and the stationary seal ring 21 forming an auxiliary seal 16. The main seal 15 is configured to include the stationary seal ring 17, the biasing member 18 which is an annular push spring, a rubber bellows 19, a retaining member 20 (28 and 29) having an annular shape, and the rotating seal ring 12. The auxiliary seal 16 is configured to include the stationary seal ring 21, the biasing member 22 which is an annular push spring, a rubber bellows 23, a retaining member 24 (31 and 32) having an annular shape, and the rotating seal ring 12.

The case body 25 is formed by pressing a metal plate, and includes the bottom surface portion 25a having an annular plate shape, an inner wall portion 26 which has a cylindrical shape and extends from an inner diameter side of the bottom surface portion 25a in the axial direction, and an outer wall portion 27 which has a cylindrical shape and extends from an outer diameter side of the bottom surface portion 25a in the axial direction. The case body 25 is formed into a substantially U-shape in a sectional view.

The retaining member 20 is disposed outside the inner wall portion 26 of the case body 25 that has an annular shape and forms the seal unit 14. The stationary seal ring 17, the biasing member 18, and the rubber bellows 19 which form the main seal 15 are retained between the retaining member 20 and the inner wall portion 26 while being interposed therebetween in the radial direction. The retaining member 20 is formed into an S-shape. The stationary seal ring 17 is disposed on an inner diameter side of a large-diameter portion 28 of the retaining member 20, and the biasing member 18 is disposed on an outer diameter side of a small-diameter portion 29 thereof. The stationary seal ring 17 is biased toward the rotating seal ring 12 by the biasing member 18, together with the retaining member 20.

A folded piece 28a is formed in an end portion of the large-diameter portion 28 of the retaining member 20. The folded piece 28a is positioned to overlap a step portion 17b, which is formed on a side of a sliding contact surface 17a of the stationary seal ring 17, in the axial direction and serves as an axial stopper for the stationary seal ring 17.

The rubber bellows 19 is disposed along the surface shape of the retaining member 20 on an inner diameter side of the retaining member 20. Accordingly, owing to the rubber bellows 19, a gap between a folded piece 29a which is formed in an end portion of the small-diameter portion 29 of the retaining member 20 and the bottom surface portion 25a of the case body 25, and a gap between the small-diameter portion 29 and the inner wall portion 26 of the case body 25 are in a sealed state.

In addition, the rubber bellows 19 includes a protruding portion 19a, which protrudes toward a surface 17c that is opposite to the sliding contact surface 17a of the stationary seal ring 17 in the axial direction, on a side of a large-diameter portion 28 of the retaining member 20. The protruding portion 19a is in press contact with the surface 17c of the stationary seal ring 17, so that the portion is in a sealed state. Furthermore, an axial end portion 19b on a side of the rotating seal ring 12 of the rubber bellows 19 is interposed between the folded piece 28a of the end portion of the large-diameter portion 28 of the retaining member 20 and the step portion 17b of the stationary seal ring 17, so that the portion is in a sealed state. As described above, the refrigerant is prevented from infiltrating into the space S2, which is formed between the main seal 15 and the auxiliary seal 16 and will be described later, through portions other than the sliding contact surface 17a of the stationary seal ring 17.

The retaining member 24 is disposed inside the outer wall portion 27 of the case body 25 that has an annular shape and forms the seal unit 14. The stationary seal ring 21, the biasing member 22, and the rubber bellows 23 which form the auxiliary seal 16 are retained between the retaining member 24 and the outer wall portion 27 while being interposed therebetween in the radial direction. The retaining member 24 is formed into an S-shape. The stationary seal ring 21 is disposed on an inner diameter side of a small-diameter portion 31 of the retaining member 24, and the biasing member 22 is disposed on an outer diameter side of a large-diameter portion 32 thereof. The stationary seal ring 21 is biased toward the rotating seal ring 12 by the biasing member 22, together with the retaining member 24.

A folded piece 31a is formed in an end portion of the small-diameter portion 31 of the retaining member 24. The folded piece 31a is positioned to overlap a step portion 21b, which is formed on a side of a sliding contact surface 21a of the stationary seal ring 21, in the axial direction and serves as an axial stopper for the stationary seal ring 21.

The rubber bellows 23 is disposed along the surface shape of the retaining member 24 on an outer diameter side of the retaining member 24. Accordingly, owing to the rubber bellows 23, a gap between a folded piece 32a which is formed in an end portion of the large-diameter portion 32 of the retaining member 24 and the bottom surface portion 25a of the case body 25, and a gap between the large-diameter portion 32 and the outer wall portion 27 of case body 25 are in a sealed state.

In addition, the rubber bellows 23 includes a protruding portion 23a, which protrudes toward a surface 21c that is opposite to the sliding contact surface 21a of the stationary seal ring 21 in the axial direction, on a side of a small-diameter portion 31 of the retaining member 24. The protruding portion 23a is in press contact with the surface 21c of the stationary seal ring 21, so that the portion is in a sealed state. Furthermore, an axial end portion 23b on a side of the rotating seal ring 12 of the rubber bellows 23 is interposed between the folded piece 31a of the end portion of the small-diameter portion 31 of the retaining member 24 and the step portion 21b of the stationary seal ring 21, so that the portion is in a sealed state. As described above, the refrigerant is prevented from infiltrating into the space S1 from the space S2, which is formed between the main seal 15 and the auxiliary seal 16 and will be described later, through portions other than the sliding contact surface 21a of the stationary seal ring 21.

As described above, the rubber bellows 19 forming the main seal 15 and the rubber bellows 23 forming the auxiliary seal 16 are symmetrically disposed on the retaining member 20 and the retaining member 24, which have symmetrical S-shapes in a sectional view, inside the case body 25, and are in contact with a side of an inner wall portion 26 and a side of an outer wall portion 27 of the case body 25 to perform sealing; and thereby, it is possible to effectively prevent the refrigerant from infiltrating into the space S2 inside the case body 25 from portions other than the sliding contact surface 17a of the stationary seal ring 17 and the sliding contact surface 21a of the stationary seal ring 21.

The rotating seal ring 12 includes the sliding contact surface 12a that is in sliding contact with the sliding contact surface 17a of the stationary seal ring 17 of the main seal 15, and the sliding contact surface 12b that is in sliding contact with the sliding contact surface 21a of the stationary seal ring 21 of the auxiliary seal 16. A recessed portion 12c which is recessed in the axial direction is formed between the sliding contact surface 12a and the sliding contact surface 12b.

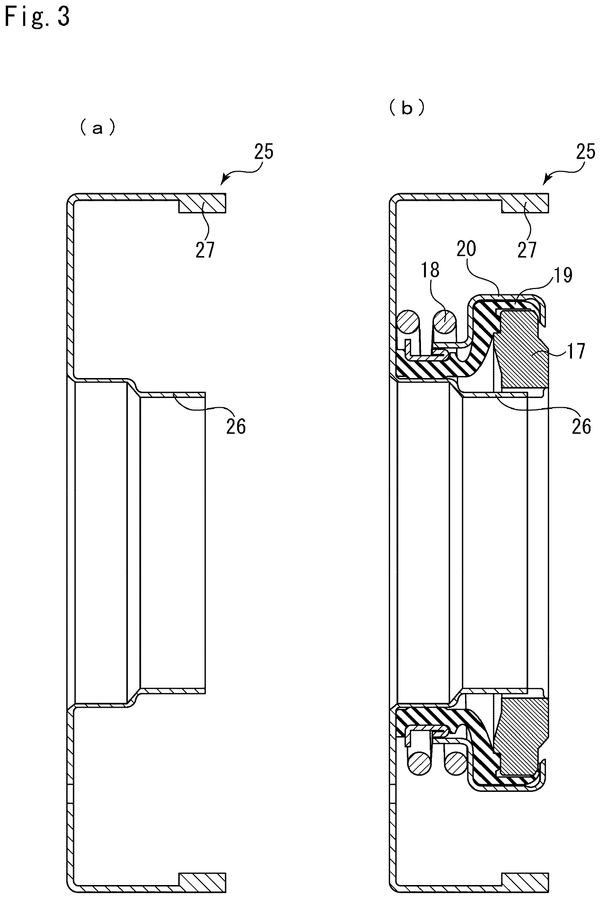

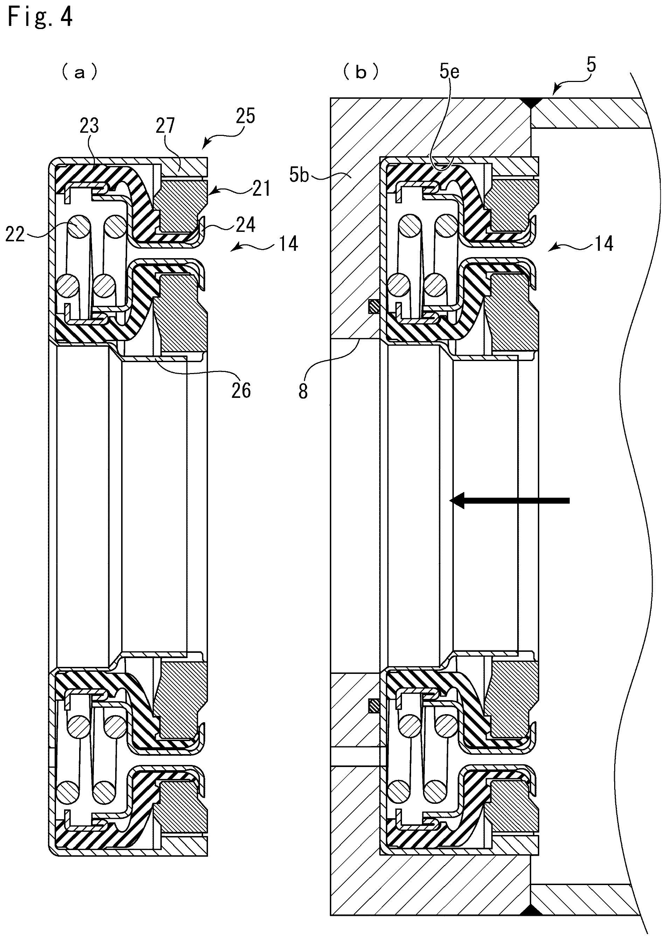

Subsequently, a procedure of assembling the seal unit 14 and a procedure of assembling the seal unit 14 to the electric motor M will be described with reference to FIGS. 3A and 3B and FIGS. 4A and 4B. As illustrated in FIGS. 3A and 3B, the stationary seal ring 17, the biasing member 18, the rubber bellows 19, and the retaining member 20 which form the main seal 15 are assembled outside the inner wall portion 26 of the case body 25. Subsequently, as illustrated in FIG. 4A, the stationary seal ring 21, the biasing member 22, the rubber bellows 23, and the retaining member 24 which form the auxiliary seal 16 are assembled inside the outer wall portion 27 of the case body 25. Finally, as illustrated in FIG. 4B, the seal unit 14 which is unitized is disposed in and fixed to the supporting wall portion 5b (split body 5A) of the housing 5. Incidentally, the sequence where the members forming the main seal 15 and the members forming the auxiliary seal 16 are assembled to the case body 25 may be reversed to the foregoing sequence.

As described above, the refrigerant flow path where the refrigerant flows and an outer side of the main seal 15 are partitioned from each other in a sealed state by the main seal 15, and the outer side of the main seal 15 and the space S1 accommodating the rotor 3 and the stator 4 are partitioned from each other in a sealed state by the auxiliary seal 16. The space S2 is formed between the main seal 15 and the auxiliary seal 16. The space S2 is surrounded by the case body 25 forming the seal unit 14 and the rotating seal ring 12.

As illustrated in FIG. 1, a refrigerant tank 35 is installed outside the electric motor M, and a suction path 36 leading to an interior of the refrigerant tank 35 is connected to the conduit 11. An opening 37, which is formed between the through-hole 8 formed in the housing 5 and the conduit 11, communicates with a discharge path 38, and the refrigerant discharged from the discharge path 38 returns to the refrigerant tank 35.

The space S3 is formed between the rotating shaft 2 and the conduit 11. An inner peripheral surface 13a of the seal member 13 which is disposed between the rotating shaft 2 and the rotating seal ring 12, an inner peripheral surface 12d of the rotating seal ring 12, an inner peripheral surface 26a of the inner wall portion 26 of the case body 25 forming the seal unit 14, and an inner peripheral surface 17d of the stationary seal ring 17 of the main seal 15, the inner peripheral surface 17d being exposed from the inner wall portion 26 toward a side of the rotating seal ring 12, are exposed toward a side of the conduit 11, and form the space S4 from an end portion on a side of the seal unit 14 of the rotating shaft 2 to the opening 37, together with an inner peripheral surface of the through-hole 8.

As described above, the refrigerant flow path in the electric motor M includes the hollow portion 11a of the conduit 11, a space between the end portion 11b of the conduit 11 and the inward end surface 2b of the space 2a of the rotating shaft 2, the space S3, and the space S4.

The refrigerant in the refrigerant tank 35 is delivered into the hollow portion 11a of the conduit 11 through the suction path 36 by a pump P. After the refrigerant delivered into the hollow portion 11a flows into the space S3, which is formed between the rotating shaft 2 and the conduit 11, through the space between the end portion 11b of the conduit 11 and the inward end surface 2b of the space 2a of the rotating shaft 2, and flows through the space S3 in the axial direction, the refrigerant returns to the refrigerant tank 35 from the opening 37, which is formed between the through-hole 8 and the conduit 11, through the discharge path 38 via the space S4.

The rotating shaft 2 is cooled by the refrigerant passing through the space S3, and the rotor 3 fixed to the rotating shaft 2 is cooled by the cooling of the rotating shaft 2. In addition, bearings 10 and 10 which serve as bearings of the rotating shaft 2 and are portions in sliding contact therewith are cooled. Furthermore, a space around the rotating shaft 2, namely, the space accommodating the rotor 3 and the stator 4 is cooled; and thereby, it is possible to indirectly cool the stator 4 that generates heat during energization. In other words, it is possible to effectively cool portions that may generate heat when the electric motor M is driven.

As described above, the sealing apparatus 1 includes the main seal 15 on an upstream side with respect to the refrigerant and the auxiliary seal 16 downstream of the main seal 15 between the refrigerant flow path which is a space where the refrigerant flows and the space S1 accommodating the device that is vulnerable to the refrigerant. For this reason, in the main seal 15, the sliding contact surface 17a of the stationary seal ring 17 and the sliding contact surface 12a of the rotating seal ring 12 are in sliding contact with each other, so that the refrigerant is effectively prevented from leaking from the refrigerant flow path which is a space where the refrigerant flows. In addition, since the auxiliary seal 16 prevents the refrigerant from infiltrating into the space S1 accommodating the device that is vulnerable to the refrigerant, even if the refrigerant leaks from the main seal 15, the leaked refrigerant does not leak to a side of the space S1 owing to the auxiliary seal 16; and thereby, it is possible to reliably prevent the refrigerant from leaking from the refrigerant flow path to the space S1.

In addition, since the auxiliary seal 16 is a mechanical seal that is disposed on an outer diameter side of the main seal 15, it is possible to maintain the ability of sealing the rotating shaft 2 that is driven to rotate; and thereby, it is possible to reliably prevent the refrigerant from leaking from the refrigerant flow path to the space S1.

In addition, the biasing member 18 of the main seal 15 and the biasing member 22 of the auxiliary seal 16 are separately formed, and the biasing member 22 of the auxiliary seal 16 has a smaller biasing force than that of the biasing member 18 of the main seal 15. Accordingly, compared to the main seal 15 which partially defines the refrigerant flow path and in which the refrigerant is supplied between the sliding contact surface 17a of the stationary seal ring 17 and the sliding contact surface 12a of the rotating seal ring, the biasing member 22 of the auxiliary seal 16 in which the refrigerant is not always supplied between the sliding contact surface 21a of the stationary seal ring 21 and the sliding contact surface 12b of the rotating seal ring has a smaller biasing force. Therefore, it is possible to restrict resistance to the rotational driving of the rotating shaft 2, which is caused by friction occurring between the stationary seal ring 21 of the auxiliary seal 16 and the sliding contact surface 12b of the rotating seal ring. Furthermore, it is possible to restrict wear between the sliding contact surface 21a of the stationary seal ring 21 and the sliding contact surface 12b of the rotating seal ring.

In addition, a drain hole 5j (refer to FIG. 1) which penetrates to the outside is formed in the supporting wall portion 5b of the housing 5, and the drain hole 5j communicates with the discharge path 38. For this reason, the refrigerant is discharged outside the electric motor M from the space S2 that is formed between the main seal 15 and the auxiliary seal 16; and thereby, it is possible to effectively prevent the refrigerant from infiltrating into the space S1 that is adjacent to the space S2 via the auxiliary seal 16.

In addition, since the stationary seal ring 17 and the biasing member 18 which form the main seal 15 and the stationary seal ring 21 and the biasing member 22 which form the auxiliary seal 16 are unitized by the case body 25, the number of steps of assembling the equipment is reduced by half, and the mounting of the unit in the electric motor M becomes easy.

In addition, the recessed portion 12c which is recessed in the axial direction is formed in the rotating seal ring 12 between the sliding contact surface 12a that is in sliding contact with the sliding contact surface 17a of the stationary seal ring 17 of the main seal 15 and the sliding contact surface 12b that is in sliding contact with the sliding contact surface 21a of the stationary seal ring 21 of the auxiliary seal 16. Accordingly, since the pressure of the refrigerant which has leaked into the space S2 from a sliding contact portion between the sliding contact surface 17a of the main seal 15 and the sliding contact surface 12a of the rotating seal ring 12 is once released in the recessed portion 12c, the pressure of the refrigerant which intends to infiltrate into the space S1 from a sliding contact portion between the sliding contact surface 21a of the stationary seal ring 21 of the auxiliary seal 16 and the sliding contact surface 12b of the rotating seal ring 12 becomes weak; and thereby, it is possible to effectively prevent the refrigerant from infiltrating into the space S1.

In addition, since the sealing apparatus 1 is configured such that the stationary seal ring 17 of the main seal 15 and the stationary seal ring 21 of the auxiliary seal 16 are in sliding contact with the same rotating seal ring 12 in the radial direction, the dimensions of the sealing apparatus 1 in the axial direction are small, and the sealing apparatus 1 can be made compact. Furthermore, since the sealing apparatus 1 has a configuration where the stationary seal ring 17 and the rubber bellows 19 which form the main seal 15 and the stationary seal ring 21 and the rubber bellows 23 which form the auxiliary seal 16 are symmetrically disposed on the retaining member 20 and the retaining member 24, which have symmetrical S-shapes in a sectional view, inside the case body 25, and a space between the retaining member 20 and the retaining member 24 in the radial direction is used in common as a space where the biasing member 18 and 22 are disposed, the sealing apparatus 1 can be made compact in the radial direction, and it is possible to reduce the cost by adopting a symmetrical structure.

Incidentally, the sliding contact surfaces 17a and 21a of the main seal 15 and the auxiliary seal 16 with respect to the rotating seal ring 12 are at the same position in the axial direction; however, the present invention is not limited thereto, and the sliding contact surfaces may be disposed at different positions in the axial direction. In addition, the sliding contact surface of the stationary seal ring 21 forming the auxiliary seal 16 may be configured to be in sliding contact with an outer peripheral surface of the rotating seal ring 12.

### {Second embodiment}

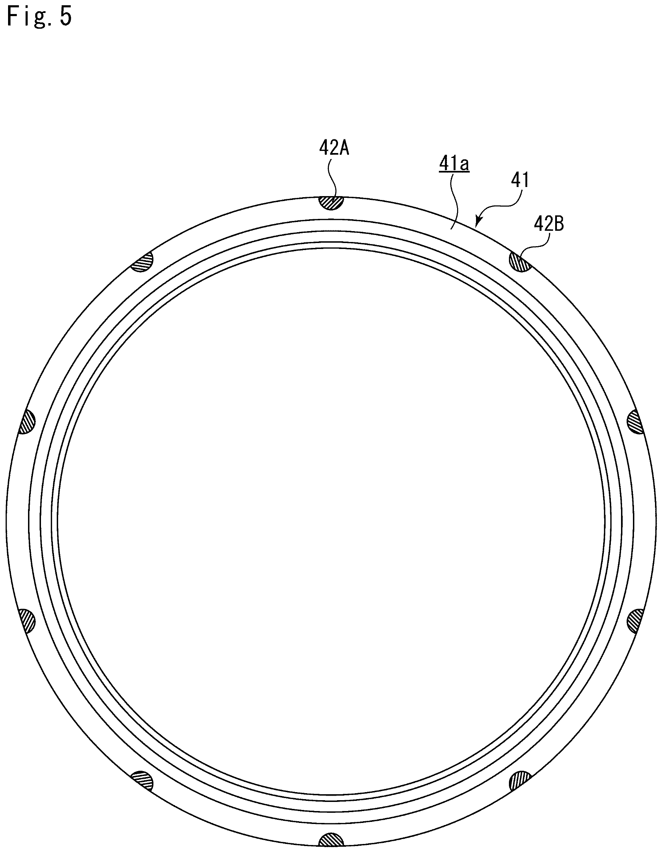

Subsequently, a sealing apparatus according to a second embodiment will be described with reference to FIG. 5. Incidentally, descriptions of the same configurations as those in the foregoing embodiment and repeated configurations will be omitted.

As illustrated in FIG. 5, in a stationary seal ring 41 of the auxiliary seal 16, a suction pumping groove 42A which acts to suction the refrigerant and a discharge pumping groove 42B which acts to discharge the refrigerant are formed in a sliding contact surface 41a with respect to the sliding contact surface 12a of the rotating seal ring 12.

Accordingly, as the rotating shaft 2 is driven to rotate, the refrigerant which has leaked into the space S2 from the refrigerant flow path is suctioned between sliding contact surface 41a of the stationary seal ring 41 and the sliding contact surface 12a of the rotating seal ring 12 by the suction pumping groove 42A to form a liquid film; and thereby, it is possible to lower friction. On the other hand, the refrigerant can be pushed out of the space S1 accommodating the device that is vulnerable to the refrigerant, namely, into the space S2 by the discharge pumping groove 42B; and thereby, it is possible to effectively prevent the fluid from infiltrating into the space S1.

Incidentally, the suction pumping groove and the discharge pumping groove may be formed in the sliding contact surface 12a of the rotating seal ring 12.

Furthermore, only the discharge pumping groove 42B may be formed in the stationary seal ring 41 of the auxiliary seal 16.

### {Third embodiment}

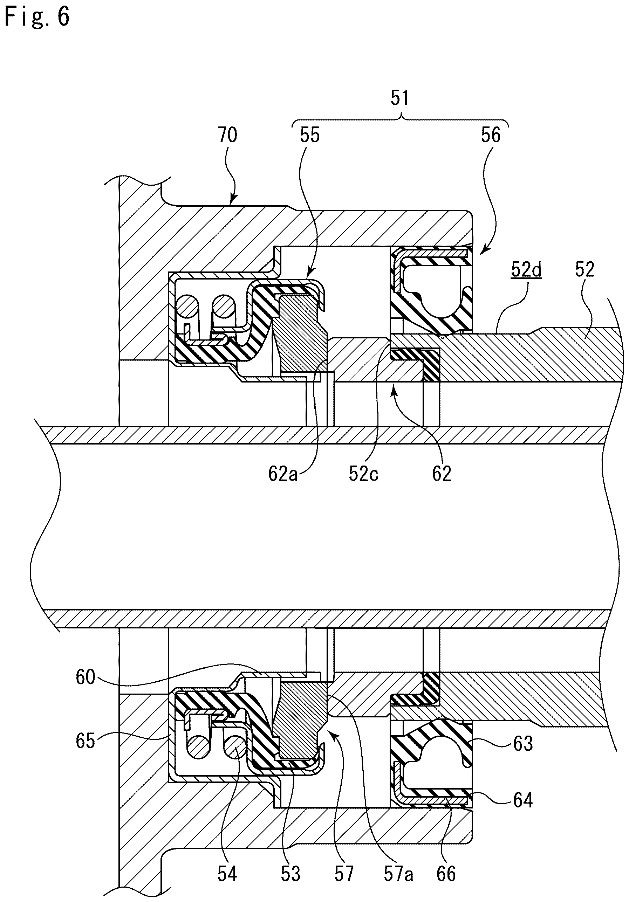

Subsequently, a sealing apparatus according to a third embodiment will be described with reference to FIG. 6. Incidentally, descriptions of the same configurations as those in the foregoing embodiments and repeated configurations will be omitted.

As illustrated in FIG. 6, a sealing apparatus 51 includes a main seal 55 and an auxiliary seal 56. The main seal 55 is a mechanical seal including a stationary seal ring 57 that includes a sliding contact surface 57a which is in sliding contact with a sliding contact surface 62a of a rotating seal ring 62 fixed to an opening end portion 52c of a rotating shaft 52, biasing member 54, a rubber bellows 53, a retaining member 60, and a case body 65.

The auxiliary seal 56 is a lip seal which is mounted on an inner side of a housing 70 and is an elastic body made of rubber and formed into an annular shape, and of which a lip portion 63 is formed on an inner diameter side of the auxiliary seal 56, of which a cylindrical portion 64 is formed on an outer diameter side thereof, of which a retaining ring 66 having an L-shape in a sectional view is formed therein by insert molding, and of which the lip portion 63 is in sliding contact with an outer peripheral surface 52d of the rotating shaft 52.

Accordingly, the main seal 55 which is a mechanical seal effectively prevents the refrigerant from leaking from the refrigerant flow path which is a space where the refrigerant flows, and even if the refrigerant leaks from the main seal 55, the leaked refrigerant does not leak to side of the space S1 owing to the auxiliary seal 56; and thereby, it is possible to reliably prevent the refrigerant from leaking from the refrigerant flow path to the space S1. In addition, a relatively inexpensive lip seal can be used as the auxiliary seal 56.

The embodiments of the present invention have been described above with reference to the drawings; however, the specific configuration is not limited to the embodiments, and changes or additions which are made without departing from the scope of the present invention can be included in the present invention.

For example, an outside stationary mechanical seal has been described as an example of the sealing apparatus 1 in the foregoing embodiments; however, the present invention is also applicable to an outside mechanical seal that seals a liquid leaking from an inner periphery of the sliding contact surface toward an outer periphery thereof, or is also applicable to a rotating mechanical seal in which the biasing member is provided on a rotating shaft 2 side.

In addition, in the first embodiment, the configuration where the main seal and the auxiliary seal slide against the same rotating seal ring in the radial direction has been described; however, the present invention is not limited to the configuration, and two rotating seal rings which are in sliding contact with the main seal and the auxiliary seal may be disposed.

In addition, the housing 5 is not limited to a split structure, and may have a split structure where the housing 5 is split in an upward and downward direction.

In addition, in the foregoing embodiments, the sealing apparatus which is used in the electric motor where a periphery of the rotating shaft can be cooled has been described; however, a target in which the sealing apparatus is used is not limited to the electric motor, and in an apparatus including a hollow rotating shaft, the sealing apparatus can used to prevent a fluid from leaking a space where the fluid flows to a space accommodating a device that is vulnerable to the fluid. The device which is vulnerable to the fluid refers to, for example, an electronic device, a member made of a synthetic resin that is eroded by a specific fluid, or the like.

In addition, the housing 5 may be made of materials other than metal.

In addition, the rubber bellows and the retaining member may be integrally formed by insert-molding the retaining member 20 in the rubber bellows 19. The same is also applied to the retaining member 24 and the rubber bellows 23.

In addition, in the foregoing embodiments, the configuration where the rotating seal ring 12 includes the sliding contact surface 12a that is in sliding contact with the sliding contact surface 17a of the stationary seal ring 17 of the main seal 15 and the sliding contact surface 12b that is in sliding contact with the sliding contact surface 21a of the stationary seal ring 21 of the auxiliary seal 16, and the recessed portion 12c which is recessed in the axial direction is formed between the sliding contact surface 12a and the sliding contact surface 12b has been described; however, a configuration where the recessed portion is omitted and the rotating seal ring 12 is in sliding contact with the main seal 15 and the auxiliary seal 16 at different positions in the radial direction may be adopted.

In addition, the configuration where the space S2 which is surrounded the case body 25 forming the seal unit 14 and the rotating seal ring 12 is formed between the main seal 15 and the auxiliary seal 16 has been described; however, the present invention is not limited to the configuration, and for example, a configuration where the sealing apparatus is used in equipment which does not include a member such as the supporting wall portion 5b of the housing 5, and does not include the case body 25 may be adopted. In this case, the space S2 is not formed between the main seal and the auxiliary seal, the main seal can prevent a leakage of the fluid between the refrigerant flow path through which the refrigerant flows and the outside of the equipment, and the auxiliary seal can prevent the fluid, which has leaked from the main seal, from infiltrating into the space S1 via the outside of the equipment.

### {REFERENCE SIGNS LIST}

- 1: Sealing apparatus
- 2: Rotating shaft
- 2a: Space
- 2b: Inward end surface
- 2c: Opening end portion
- 3: Rotor
- 4: Stator
- 5: Housing
- 5A, 5B, 5C: Split body
- 5a: Peripheral wall portion
- 5b, 5c: Supporting wall portion
- 5e: Step portion
- 5j: Drain hole
- 8: Through-hole
- 9: Fixing means
- 10: Bearing
- 11: Conduit
- 11a: Hollow portion
- 11b: End portion
- 12: Rotating seal ring (member on rotating shaft side)
- 12a: Sliding contact surface
- 12b: Sliding contact surface
- 12c: Recessed portion
- 14: Seal unit
- 15: Main seal
- 16: Auxiliary seal
- 17: Stationary seal ring
- 17a: Sliding contact surface
- 18: Biasing member
- 19: Rubber bellows
- 20: Retaining member
- 21: Stationary seal ring
- 21a: Sliding contact surface
- 22: Biasing member
- 23: Rubber bellows
- 25: Case body
- 35: Refrigerant tank
- 36: Suction path
- 37: Opening
- 38: Discharge path
- 39: Welded portion
- 41: Stationary seal ring
- 41a: Sliding contact surface
- 42A: Suction pumping groove
- 42B: Discharge pumping groove
- 50: Rotating seal ring
- 51: Sealing apparatus
- 52: Rotating shaft
- 52c: Opening end portion
- 52d: Outer peripheral surface
- 53: Rubber bellows
- 54: Biasing member
- 55: Main seal
- 56: Auxiliary seal
- 57: Stationary seal ring
- 57a: Sliding contact surface
- 60: Retaining member
- 62: Rotating seal ring
- 62a: Sliding contact surface
- 63: Lip portion
- 64: Cylindrical portion
- 65: Case body
- 66: Retaining ring
- 70: Housing
- M: Electric motor
- P: Pump
- S1 to S4: Space

## Claims

1. A sealing apparatus that is used in equipment, which includes a rotating shaft, to seal a first space where a fluid flows and a second space accommodating a device that is vulnerable to the fluid, comprising:
a main seal that partially defines the first space to restrict the fluid from leaking from the first space and includes a rotating seal ring provided on the rotating shaft, a stationary seal ring provided in the equipment, and a biasing member configured to bias the rotating seal ring and the stationary seal ring in a facing direction; and
an auxiliary seal that partially defines the second space to prevent the fluid from infiltrating into the second space and is in sliding contact with the rotating shaft or a member connected to the rotating shaft at a position which is different from a position of the main seal.

2. The sealing apparatus according to claim 1,
wherein the auxiliary seal includes the rotating seal ring, a stationary seal ring that is fixed to the equipment unlike the stationary seal ring of the main seal, and a biasing member that biases the rotating seal ring and the stationary seal ring forming the auxiliary seal in a facing direction.

3. The sealing apparatus according to claim 2,
wherein the biasing member of the main seal and the biasing member of the auxiliary seal are separately formed, and the biasing member of the auxiliary seal has a biasing force smaller than a biasing force of the biasing member of the main seal.

4. The sealing apparatus according to claim 2 or 3,
wherein a pumping groove which directs the fluid to be sealed from the second space to the first space is formed in at least one of sliding contact surfaces of the stationary seal ring of the auxiliary seal and the rotating seal ring.

5. The sealing apparatus according to any one of claims 2 to 4,
wherein the sealing apparatus further comprises a case body having an annular shape and provided with an inner wall portion and an outer wall portion, and the stationary seal ring and the biasing member of the main seal and the stationary seal ring and the biasing member of the auxiliary seal are retained between the inner wall portion and the outer wall portion of the case body.

6. The sealing apparatus according to any one of claims 2 to 5,
wherein a recessed portion which is recessed in an axial direction is formed in the rotating seal ring between a sliding contact surface of the rotating seal ring, which is in sliding contact with the stationary seal ring of the main seal, and a sliding contact surface thereof which is in sliding contact with the stationary seal ring of the auxiliary seal.

7. The sealing apparatus according to any one of claims 1 to 6,
wherein a third space is formed between the main seal and the auxiliary seal, and a drain hole is formed so as to penetrate from the third space to an outside of the equipment.
